# EUROPEAN PATENT APPLICATION

(11) **EP 2 602 891 A2**
(43) Date of publication of application: **12.06.2013**
(21) Application number: 12150767.7
(22) Date of filing: 11.01.2012
(51) Int. Cl.: H02G 15/115

(54) **Hermetic cover for an electrical connector**

(30) Priority: 07.12.2011 PL 39726611
(71) Applicant: Wronski, Andrzej, 05-807 Podkowa Lesna (PL)
(72) Inventor: Wronski, Andrzej, 05-807 Podkowa Lesna (PL)
(74) Representative: Fietko-Basa, Sylwia

(57) **Abstract**

A hermetic cover of an electrical connector consisting of elastic, circumferentially connected fittings forming a closed chamber, while each of these elastic fittings includes at least one cableway, wherein neighbouring elastic fittings **(1)** and **(2)** are inserted one into the other and fit each other tightly with their side surfaces along their whole lengths or along the lengths limited by stabilising protrusions **(5)**, while it is preferred that one elastic fitting **(1)** inserted into another elastic fitting **(2)** has at least one circumferentially connected stiffening element in the form of a narrow clamp **(7)** located in the area of contact between the two fittings **(1)** and **(2)**.

## Description

The current invention is a hermetic cover for an electrical connector, especially a connector for electrical supply cables with external sheath and wire insulation. Hermetic protection for an electrical connector against moisture and dust is especially useful in electrical devices with infrared or light emitters, where such protection is required to ensure electrical safety.

In currently known solutions, the connections are insulated by leading the cables out of the device and into a separate hermetic box or by hermetically insulating the whole casing of the device or a part of it, in each case making the insulation fit a particular casing. Such solutions are not universal, take up space, while the insulation of the whole casing significantly increases the manufacturing cost of the device. Moreover, in the case of infrared radiation, hermetic casings cause an additional problem connected with their cooling.

For example, one of the known solutions involves a metal base for the electrical elements of a water-tight lighting fitting installed on a plastic base, with a reflector, fluorescent lamps and the top cover attached to the whole construction. This solution lacks universality, since for infraread heat emitters full casing creates problems with releasing heat from the electrical connectors, the emitter and the casing.

On the other hand, patent description no. WO2005036928 includes a radiation device, in which the thermal radiation emitter is protected against vibration and mechanical tension caused by thermal expansion occurring in such devices. This device includes a load-bearing casing equipped with two hooks that carry a pipe radiation emitter. The pipe radiation emitter is connected with hook units using elastic connecting elements, each of which is installed on the end of the emitter so that it serves shock-absorbing and insulating purposes. The hook units determine the cover area, where the electrical connector protectors are installed. Such a solution is complex and, thus, costly.

Patent no. PL-208939 describes a minimised cover in the form of a separate element designating a hermetic space, consisting of seals and a cableway which is circumferentially adjacent, on its internal or external surface, to the seal situated on the end of the pipe infrared radiation emitter, while the other side it is circumferentially adjacent, on its internal or external surface, to the other seal which is adj acent to power supply cables or preferably adj acent to the end of the additional elastic cover of the power supply cables, Such a cover protects the direct connection to the emitter, but is not a universal cover for electrical connectors.

Patent description no. US 5266742 shows a connector cover consisting of elastic conical internal bushes installed in an external tube-shaped head with conical tips on both ends. The conical tips of the external head are connected with the internal cylindrical element with a bolt joint. The inside of the goblet-shaped space is filled with an insulating material. This solution also lacks versatility and, additionally, its disassembly is complicated due to the insulating material.

As can be seen in the current state of the art described above, even though numerous solutions for hermetically insulating electrical connections exist, there is no universal cover, that is, one which could be used for different devices, would occupy little space and at the same time, effectively protect an electrical connector against moisture and dust.

A hermetic cover of an electrical connector consisting of elastic, circumferentially connected fittings forming a closed chamber, with each of these elastic fittings having at least one cableway, according to the current invention, is characterized in that the neighbouring elastic fittings fit inside each other and their side surfaces are tightly adjacent to each other their whole lengths or along the lengths limited by retainer protrusions, while it is preferred if the elastic fitting inserted into another elastic fitting has at least one built-in circumferential stiffening element in the form of a narrow clamp located in the area of contact between the two fittings.

The hermetic cover is characterized in that it the clamp combined with the fitting is preferably convex on the outer surface of the fitting.

The hermetic cover for an electrical connector is characterised in that each of these elastic fittings has a preferred tubular shape, while the end fittings are closed with a cap on one end.

The hermetic cover for an electrical connection is also characterised in that at least one cableway is formed in each end cap, with a diameter slightly smaller than the diameter of the cable or the diameter of the bundle introduced into the cover.

The hermetic cover for an electrical connection is also characterised in that at least one of the elastic fittings preferably has additional openings, protrusions and bend protectors on its side surface with a diameter slightly smaller than the diameter of the cables or the bundle introduced into the cover.

The hermetic cover for an electrical connection is also characterised in that the stabilising protrusions situated inside each external fitting are located at a depth preventing the fittings from sliding out by themselves or from the connection becoming non-hermetic, preferably not less than 1/3 of the length of the fitting.

The hermetic cover for an electrical connector is also characterised in that the clamp is made of stiff material, preferably metal or plastic.

The hermetic cover for an electrical connector is also characterised in that the elastic fittings are made of high-temperature silicone.

The hermetic cover for an electrical connector manufactured according to the present invention is simple in its construction, universal in application and characterised by a highly effective protection of electrical contacts against moisture and dust. Therefore, it meets the safety requirements for devices operating outdoors or in high moisture and high dust concentration environments. The use of the clamp makes it easier to slide the fittings together, as well as causes the fittings to be in tight contact with each other, forming a hermetic space. The internal stabilising protrusions provide deep enough overlapping of the fittings at the required depth, which prevents the connector from becoming non-hermetic. This solution allows for abandoning the existing construction of heat and light emitters, and especially infrared radiation emitters, whose complex casing shapes were selected according to complicated hermetic covers. By using the cover presented in this invention in infrared heat emitters, the problem of casing cooling will be completely eliminated. This simple solution will make it possible to make the casing completely non-hermetic and to use air as a cooling agent. Eliminating the problem of sealing the whole device as well as the problem of cooling will allow for lighter heat and light emitter designs, which will in turn lower the cost of their manufacturing. Another advantage of this invention is the ability to quickly replace faulty elements, as it is very easy to install and remove the hermetic cover in this solution.

The solution according to the present invention is shown in examples in the following figures. Fig. 1 shows a hermetic cover of a connector consisting of two fittings in a version without a stiffening clamp, presented in the cross-section, Fig. 2 shows a hermetic cover consisting of two fittings with a stiffening clamp with an additional side cable channel, shown in the cross-section, Fig. 3 shows a hermetic cover consisting of three fittings with a stiffening clamp and an additional side cable channel, shown in the cross-section, Fig. 4 to Fig. 7 show different variants of combining the fittings in a cover with different branch-off points for cables, while Fig. 8 to Fig. 10 show example shapes of the cross-sections of the fittings.

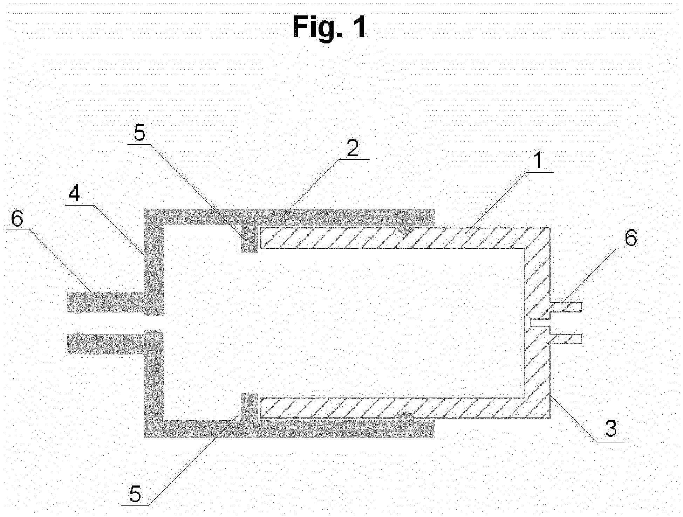

The embodiment shown in fig. 1 includes a hermetic cover for an electrical connector consisting of an internal elastic fitting **1** and an external elastic fitting pulled over it **2**, that form a hermetic space together. The internal elastic fitting **1** is tube-shaped and closed with a cap on one end **3**. The external fitting **2** is also tube-shaped with a slightly larger diameter, closed with a cap on one end **4**. The inside of the external fitting **2** includes stabilising protrusions 5 that regulate the depth of the overlap of fitting **2** and fitting **1**. Elastic fittings 1 and 2 are made of high-temperature silicone, and each one is equipped with a cableway **6** in the cap at the end. The diameter of cableways **6** are always slightly smaller than the diameter of the cables or bundles, which makes them fit tightly around the cables. Cableways **6** are protected by means of a thin membranes that can be easily broken.

In other embodiments, the same connector can be equipped with differently shaped elastic fittings **1** and **2**, but these shapes always have to be identical in the area of their contact.

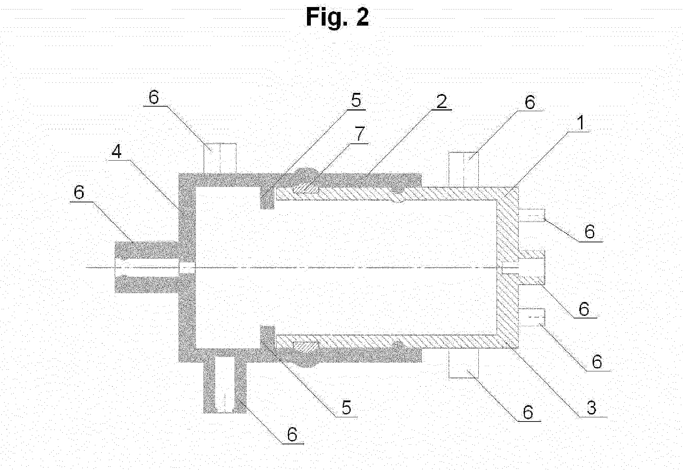

In the embodiment shown in Fig. 2, ithe hermetic cover for an electrical connectpr consists of an internal elastic fitting 1 and an external elastic fitting pulled over it 2, that form a hermetic space together. The internal elastic fitting 1 is tube-shaped and closed on one end with a cap 3, and includes a built-in circumferential stiffening narrow clamp 7. Clamp 7 is made of metal and installed in fitting 1 so that it slightly protrudes on the outer wall. Cap 3 and the side surface of fitting 1 include cableways 6. External fitting 2 is also tube-shaped with a slightly larger diameter, closed with a cap on one end **4**. The inside of external fitting **2** include stabilising protrusions 5 that regulate the depth of the overlap of fitting **2** and fitting **1**. Cap 4 and the side surface of fitting 1 include cableways 6. Elastic fittings **1** and **2** are made of high-temperature silicone. The diameter of the openings **6** is slightly smaller than the diameter of the cables or bundles, which makes them fit tightly around the cables. In other embodiments, the same connection can be equipped with differently shaped elastic fittings **1** and **2**, but these shapes have to be identical in the area of their contact.

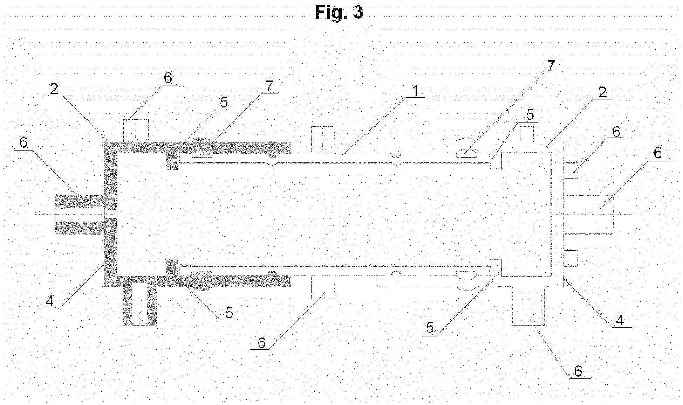

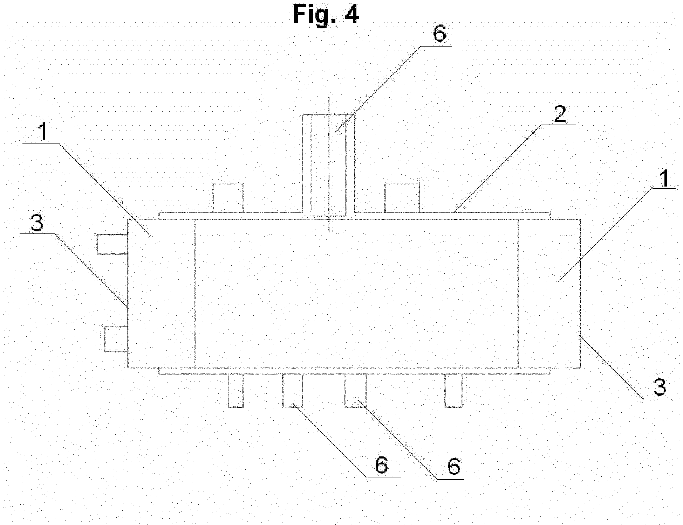

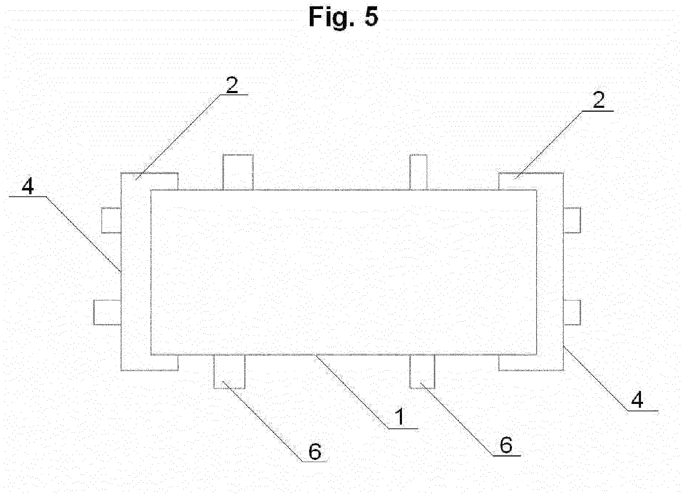

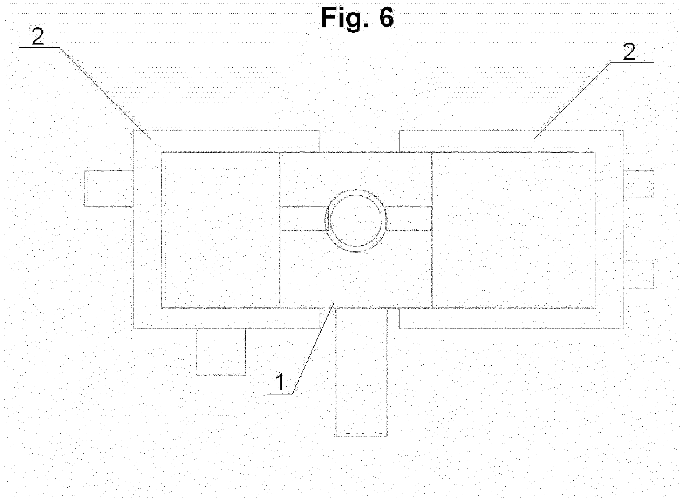

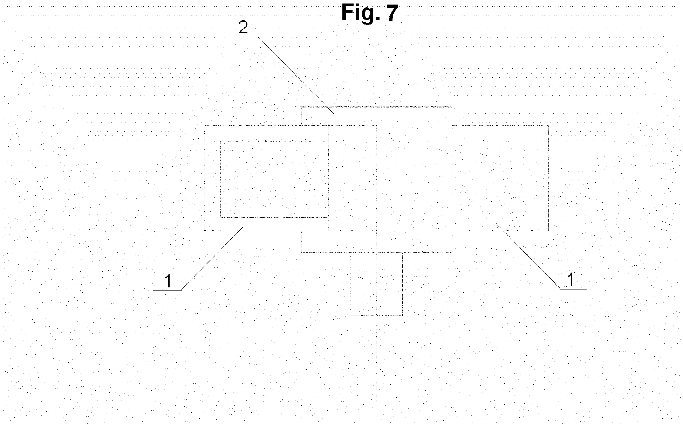

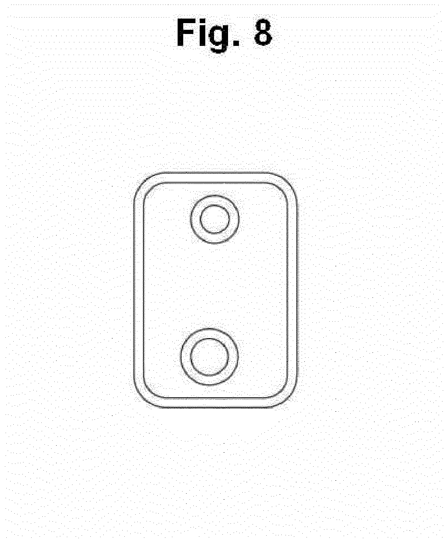

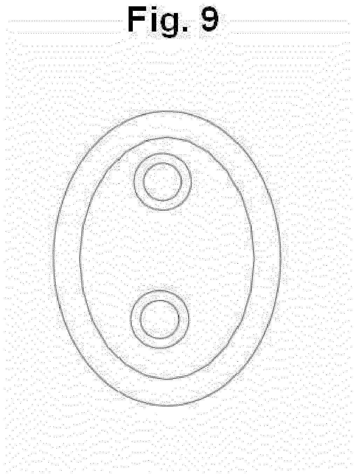

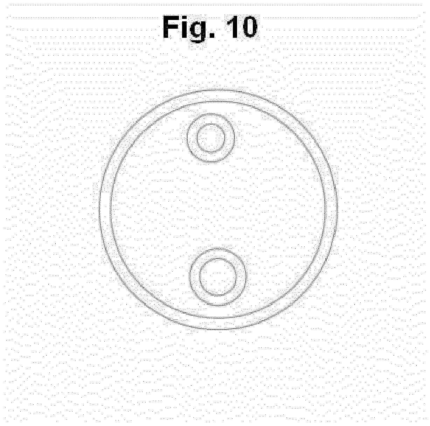

Another embodiment shown in Fig. 3 includes a hermetic cover for an electrical connector consisting of internal elastic fitting **1** and two external elastic fittings pulled over it **2**, that form a hermetic space together. Internal elastic fitting 1 is tube-shaped and it includes built-in circumferential stiffening narrow clamps 7. Clamps 7 are made of metal and are installed in fitting 1 on both sides of the bush so that they slightly protrude on the outer wall. External fittings **2** are also tube-shaped with a slightly larger diameter, each one closed with a cap on one end **4**. The inside of external fittings **2** include stabilising protrusions **5** that regulate the depth of the overlap of fitting **2** and fitting **1**. Elastic fittings 1 and 2 are made of high-temperature silicone, and each of them includes numerous cableways 6 in the form of protrusions and bend protectors, the type and quantity of which depends on the need. The diameter of the openings is always slightly smaller than the diameter of the cables or bundles, which makes them fit tightly around the cables. In other embodiments, the same connector can be equipped with differently shaped elastic fittings **1** and **2**, shown in Fig. 8 to Fig. 10, but these shapes have to be identical in the area of their contact. Other variants of connections between fittings 1 and 2 are shown in Fig. 4 to Fig. 7.

The embodiments of the invention were tested for tightness and IP protection. The IP protection tests were conducted under the following conditions:
- voltage fluctuations no higher than 1%;
- temperatures maintained at 22.5 (±0.2) °C;
- relative humidity of 38.1 (±2) %.

The tests were conducted based on the requirements of the PN-EN 60335-1:2004 standard, point 15.1 and point 22.1 (requirements of the referenced standard PN-EN 60529:2003)

| | X | Y | No ring | With stiffening ring |
|---|---|---|---|---|
| T a b l e | 2 | | meets | meets |
| | 3 | | meets | meets |
| | 4 | | meets | meets |
| | 5 | | meets | meets |
| | 6 | | does not meet | meets |
| | | 4 | meets | meets |
| I | | 5 | meets | meets |
| | | 6 | does not meet | meets |
| P | | 7 | does not meet | meets |
| | | 8 | does not meet | does not meet |

- Based on the tests of the hermetic cover for an electrical connection, it was confirmed that both the ringless solution and the solution with a stiffening ring meet the requirements of the standard, and that the stiffening ring significantly improves the casing protection against solid substances and water reaching the inside of the casing. After assembling the electrical installation in the elastic cover stiffened with a ring, the casing is not deformed and the level of protection provided by such a casing is not decreased. This results in significantly improved safety of the operation of electrical devices equipped with such casings. Such devices can be more universally operated, regardless of atmospheric conditions.

## Claims

1. A hermetic cover of an electrical connector consisting of elastic, circumferentially connected fittings forming a closed chamber, while each of these elastic fittings includes at least one cableway, is **characterized in that** neighbouring elastic fittings **(1)** and **(2)** are inserted one into the other and fit inside each other tightly with their side surfaces along their whole lengths or along the lengths limited by stabilising protrusions **(5)**, while it is preferred that one elastic fitting **(1)** inserted into another elastic fitting **(2)** has at least one circumferentially connected stiffening ring in the form of a narrow clamp **(7)** located in the area of contact between fittings **(1)** and **(2)**.

2. The hermetic cover described in claim 1 above is **characterized in that** clamp **(7)** connected with fitting **(1)** is preferably protrudes on the external side of the fitting.

3. The hermetic cover described in claim 1 is **characterized in that** each of elastic fittings **(1)** and **(2)** is preferably tube-shaped, while end fittings **(1)** and/or **(2)** are closed with a cap on one end **(3)** or **(4)**.

4. The hermetic cover described in claim 1 is **characterized in that** each of caps **(3)** and **(4)** has at least one cableway **(6)**, with a diameter slightly smaller than the diameter of the cables or the bundle inserted into the cover.

5. The hermetic cover described in claim 1 is **characterized in that** at least one of elastic fittings **(1)** and **(2)** has preferably additional cableways **(6)** in the side surface in the form of protrusions or bend protectors with the diameter slightly smaller than the diameter of the cables or the bundle inserted into the cover.

6. The hermetic cover described in claim 1 is **characterized in that** stabilising protrusions **(5)** located inside each of the external fittings **(2)** are positioned at a depth preventing the fittings from sliding out of each other on their own or the loss of the connector's tightness, preferably no less than 1/3 of the fitting's length.

7. The hermetic cover described in claim 1 is **characterized in that** clamp **(7)** is made of stiff material, preferably metal or plastic.

8. The hermetic cover described in claim 1 is **characterized in that** elastic fittings **(1)** and **(2)** are made of high-temperature silicone.
